# FASCICULE DE BREVET EUROPEEN

(11) **EP 3 632 795 B1**
(45) Date de publication et mention de la délivrance du brevet: **17.04.2024**
(21) Numéro de dépôt: 19200297.0
(22) Date de dépôt: 27.09.2019
(51) Int. Cl.: B64C 25/42, B60T 8/17, B64C 25/44, B60T 13/74, B60T 8/88, B64C 25/46

(54) **ARCHITECTURE DE SYSTÈME DE FREINAGE POUR AÉRONEF**
AUFBAU EINES BREMSSYSTEMS FÜR LUFTFAHRZEUG
ARCHITECTURE OF AN AIRCRAFT BRAKING SYSTEM

(30) Priorité: 01.10.2018 FR 1859059
(43) Date de publication de la demande: 08.04.2020
(73) Titulaire: Safran Landing Systems, 78140 Vélizy-Villacoublay (FR)
(72) Inventeur: ONFROY, Dominique, 77550 MOISSY-CRAMAYEL (FR); FREY, Olivier, 77550 MOISSY-CRAMAYEL (FR); GOYEZ, Brian, 77550 MOISSY-CRAMAYEL (FR)
(74) Mandataire: Cabinet Boettcher

(56) Documents cités:
- EP-A1- 2 878 501
- EP-A1- 2 902 285
- EP-A1- 3 275 743
- US-A1- 2008 258 548
- US-A1- 2011 155 521

## Description

L'invention concerne le domaine des architectures de système de freinage pour aéronef.

### ARRIERE PLAN DE L'INVENTION

Une architecture de système de freinage électrique d'aéronef comporte classiquement une pluralité de freins destinés chacun à freiner une roue d'un atterrisseur de l'aéronef.

Chaque frein comporte des organes de friction et des actionneurs électromécaniques indépendants (typiquement quatre actionneurs) destinés à appliquer un effort de freinage sur les organes de friction et ainsi exercer un couple de freinage sur la roue.

L'architecture comporte aussi une voie de contrôle qui reçoit une consigne de freinage du pilote et transforme la consigne de freinage en signaux de commande, et un module de puissance qui génère à partir des signaux de commande des courants électriques d'alimentation pour alimenter les moteurs électriques des actionneurs électromécaniques.

Une telle architecture présente naturellement et intrinsèquement un niveau de redondance élevé, de par le nombre d'actionneurs électromécaniques indépendants utilisés pour le freinage.

Ce niveau de redondance élevé est efficace pour contrer les effets de la défaillance d'un ou de plusieurs composants de l'architecture. Cependant, ce niveau de redondance peut être inefficace vis-à-vis d'une panne de mode commun résultant de la défaillance simultanée de tous les composants d'un même type, par exemple de la défaillance matérielle (ou *hardware,* en anglais) de tous les microcontrôleurs de la voie de contrôle ou du module de puissance, ou bien résultant d'une erreur, conduisant, par exemple, à la mise en défaut du logiciel hébergé par les microcontrôleurs dans des conditions non prévues lors du développement.

Il peut donc s'avérer nécessaire d'implémenter deux voies de contrôle dissimilaires, de sorte qu'en cas de défaillance de mode commun d'une première voie de contrôle, la seconde voie de contrôle reste fonctionnelle et assure le freinage.

Une implémentation sous la forme d'une architecture active/passive peut être envisagée. Dans une telle implémentation, la voie de contrôle normalement passive est utilisée uniquement lorsque qu'une panne impacte la voie de contrôle normalement active (c'est-à-dire qu'une panne survient sur la voie elle-même ou bien empêche son fonctionnement).

Une implémentation sous la forme d'une architecture active/active peut aussi être envisagée. Dans une telle implémentation, les deux voies de contrôle sont actives simultanément et assurent chacune simultanément le fonctionnement nominal du système de freinage électrique.

Par rapport à l'implémentation active/passive, cette implémentation présente notamment les avantages :
- d'éviter l'introduction de composants inactifs dans le fonctionnement normal du système de freinage électrique (ayant potentiellement un impact négatif en matière de fiabilité, de masse et de coût) ;
- d'éviter l'introduction d'un mécanisme de reconfiguration (de la voie de contrôle normalement active à la voie de contrôle normalement passive) devenant un point critique du système (ses pannes pouvant amener des reconfigurations ou des pertes de contrôle intempestives).

La dissimilarité matérielle fournit une protection contre une défaillance de mode commun des composants matériels, résultant par exemple du vieillissement prématuré et d'une défaillance simultanée d'un lot de composants suite à un défaut de fabrication. Cependant, elle n'apporte pas de protection contre de potentielles erreurs conduisant à un défaut pouvant résulter de conditions de fonctionnement spécifiques et non anticipées lors du développement et affectant par exemple les logiques de contrôle.

### OBJET DE L'INVENTION

L'invention a pour objet une architecture de système de freinage pour aéronef qui permet de résoudre l'ensemble des difficultés qui viennent d'être évoquées.

### RESUME DE L'INVENTION

En vue de la réalisation de ce but, on propose une architecture de système de freinage pour aéronef comme dans la revendication 1. En particulier, cette architecture comporte:
- un frein destiné à freiner une roue de l'aéronef et comportant des organes de friction ainsi qu'un premier actionneur électromécanique et un deuxième actionneur électromécanique comprenant respectivement un premier moteur électrique et un deuxième moteur électrique et agencés pour appliquer un effort de freinage sur les organes de friction ;
- une voie de contrôle principale et une voie de contrôle alternative comprenant des composants électriques qui sont au moins partiellement différents et agencées pour mettre en oeuvre respectivement un contrôle de freinage principal et un contrôle de freinage alternatif qui sont au moins partiellement différents, de sorte que la voie de contrôle principale et la voie de contrôle alternative génèrent respectivement des signaux de commande principaux et des signaux de commande alternatifs ;
- un premier module de puissance et un deuxième module de puissance comprenant des composants électriques qui sont au moins partiellement différents et agencés pour générer, à partir des signaux de commande principaux ou bien des signaux de commande alternatifs, respectivement au moins un premier courant électrique d'alimentation pour alimenter le premier moteur électrique et au moins un deuxième courant électrique d'alimentation pour alimenter le deuxième moteur électrique ;
- une unité de surveillance agencée pour assurer que, en fonctionnement normal, les signaux de commande principaux sont utilisés pour générer le premier courant électrique d'alimentation et le deuxième courant électrique d'alimentation et que, en cas de panne impactant la voie de contrôle principale, les signaux de commande alternatifs sont utilisés pour générer le premier courant électrique d'alimentation et le deuxième courant électrique d'alimentation.

Ainsi, la voie de contrôle principale et la voie de contrôle alternative, qui mettent en oeuvre des fonctions complexes et susceptibles de défaillances et d'erreurs, présentent une dissimilarité matérielle et une dissimilarité fonctionnelle.

On limite ainsi les sources d'erreurs potentielles communes entre la voie de contrôle principale et la voie de contrôle alternative.

Le premier module de puissance et le deuxième module de puissance, pour lesquels seule une défaillance matérielle doit être considérée comme panne de mode commun, présentent quant à eux une dissimilarité matérielle.

L'architecture est donc protégée contre une défaillance de mode commun des composants matériels.

La gestion de la reconfiguration entre la voie de contrôle principale et la voie de contrôle alternative est simple et n'introduit pas de complexité ou de similarité susceptibles d'engendrer une panne de mode commun.

L'implémentation active/passive s'applique uniquement sur la voie de contrôle principale et la voie de contrôle alternative, et non sur les modules de puissance et les actionneurs électromécaniques, de sorte que les inconvénients de cette implémentation, évoqués plus tôt, sont ici limités.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente une architecture de système de freinage pour aéronef selon un premier mode de réalisation de l'invention, avec deux actionneurs électromécaniques ;
- la figure 2 représente l'architecture de la figure 1 en fonctionnement normal ;
- la figure 3 représente l'architecture de la figure 1 alors qu'une panne impacte la voie de contrôle principale ;
- la figure 4 représente une architecture de système de freinage pour aéronef selon le premier mode de réalisation de l'invention, avec quatre actionneurs électromécaniques ;
- la figure 5 représente une architecture de système de freinage pour aéronef selon un deuxième mode de réalisation de l'invention, avec deux actionneurs électromécaniques ;
- la figure 6 représente une architecture de système de freinage pour aéronef selon un troisième mode de réalisation de l'invention, avec deux actionneurs électromécaniques.

### DESCRIPTION DETAILLEE DE L'INVENTION

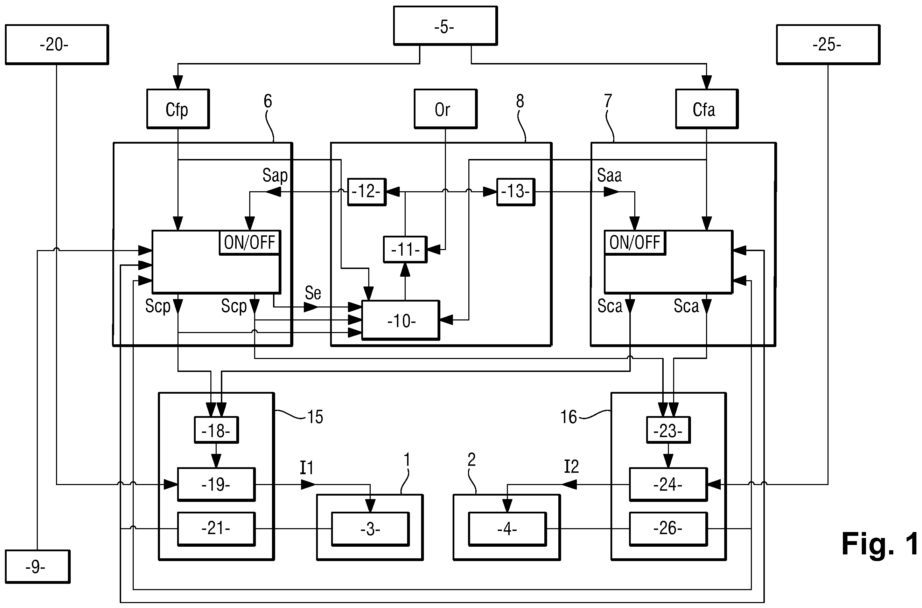

En référence à la figure 1, l'architecture de système de freinage selon un premier mode de réalisation de l'invention comprend un frein destiné à freiner une roue dite « freinée" d'un atterrisseur de l'aéronef. Le frein comporte des organes de friction, par exemple une pile de disques en carbone, ainsi qu'un premier actionneur électromécanique 1 et un deuxième actionneur électromécanique 2 qui sont agencés pour appliquer un effort de freinage sur les organes de friction. Le premier actionneur électromécanique 1 comporte un premier moteur électrique 3 et le deuxième actionneur électromécanique 2 comporte un deuxième moteur électrique 4.

Le premier moteur électrique 3 et le deuxième moteur électrique 4 sont pilotés à partir d'un ordre de freinage généré par exemple par un pilote de l'aéronef 5 ou par un système de freinage automatique. L'ordre de freinage est transformé en une consigne de freinage principale Cfp et en une consigne de freinage alternative Cfa qui sont représentatives de l'ordre de freinage et générées via des mécanismes différents afin d'éviter les défauts de mode commun entre ces deux consignes.

L'architecture de système de freinage comporte de plus une voie de contrôle principale 6, une voie de contrôle alternative 7 et une unité de surveillance 8. On note ici que chaque voie de contrôle 6, 7 ainsi que l'unité de surveillance 8 peuvent être mises en oeuvre dans un ou plusieurs équipements, sur une ou plusieurs cartes électriques.

La voie de contrôle principale 6 comporte des composants électriques comprenant un ou plusieurs composants numériques de traitement, parmi lesquels on peut trouver un microcontrôleur. La voie de contrôle principale 6 est conçue à partir d'une première spécification matérielle (c'est-à-dire que sa conception répond à des exigences matérielles définies par la première spécification matérielle) et à partir d'une première spécification fonctionnelle (c'est-à-dire que sa conception répond à des exigences fonctionnelles définies par la première spécification fonctionnelle).

La voie de contrôle principale 6 est tout d'abord destinée à mettre en oeuvre un contrôle de freinage principal. Le contrôle de freinage principal est réalisé par des logiques de contrôle complexes qui sont exécutées par le microcontrôleur. La voie de contrôle principale 6 acquiert ainsi la consigne de freinage principale Cfp et génère des signaux de commande principaux Scp à destination du premier actionneur électromécanique 1 et des signaux de commande principaux Scp à destination du deuxième actionneur électromécanique 2 (les signaux de commande principaux Scp sont possiblement différents entre le premier actionneur électromécanique 1 et le deuxième actionneur électromécanique 2). La consigne de freinage principale Cfp est une consigne numérique et chemine sur un bus numérique. Les signaux de commande principaux Scp sont des signaux booléens de type PWM, numériques ou analogiques.

Le contrôle de freinage principal met en oeuvre une fonction d'anti-patinage.

Le contrôle de freinage principal met aussi en oeuvre des machines d'états pour séquencer différentes phases de fonctionnement du premier actionneur électromécanique 1 et du deuxième actionneur électromécanique 2.

Le contrôle de freinage principal met aussi en oeuvre un asservissement de l'effort de freinage basé sur une mesure directe de l'effort de freinage. Alternativement, l'asservissement de l'effort de freinage est basé sur un contrôle d'un enfoncement des pistons dans les organes de friction du frein.

La voie de contrôle principale 6 est par ailleurs adaptée à détecter une panne qui l'impacte, qu'elle provienne de la voie de contrôle principale 6 elle-même ou de l'extérieur. Une auto-surveillance et/ou un mécanisme de type *watchdog* sont mis en oeuvre à cet effet dans la voie de contrôle principale 6. La voie de contrôle principale 6 produit ainsi un signal d'état Se représentatif de l'état (panne ou fonctionnement normal) de la voie de contrôle principale 6.

La voie de contrôle principale 6 est aussi reliée à un ou des capteurs 9 qui mesurent un ou des paramètres de la roue, du frein ou des actionneurs électromécaniques. Ces capteurs 9 sont utilisés pour mettre en oeuvre le contrôle de freinage principal.

Les capteurs 9 comprennent par exemple un capteur de vitesse de rotation de la roue, qui est utilisé pour mettre en oeuvre une fonction d'anti-patinage. La voie de contrôle alternative 7 n'est pas reliée à un tel capteur, car elle n'assure pas cette fonction.

Cependant, on pourrait prévoir que la voie de contrôle alternative 7 mette aussi en oeuvre la fonction d'anti-patinage. On utilise dans ce cas un capteur de vitesse différent de celui de la voie de contrôle principale 6. La voie de contrôle alternative 7 comporte des composants électriques dissimilaires des composants numériques de traitement de la voie de contrôle principale 6, en l'occurrence une pluralité de composants analogiques. Les composants électriques de la voie de contrôle alternative 7 sont ainsi au moins partiellement différents de ceux de la voie de contrôle principale 6.

On note que la dissimilarité entre la voie de contrôle principale 6 et la voie de contrôle alternative 7 peut être plus large et porter sur tous les composants électroniques des voies de contrôle.

Par ailleurs, le cas d'une voie de contrôle alternative 7 « tout analogique » est un cas particulier. La voie de contrôle alternative pourrait comprendre des composants numériques dissimilaires de ceux de la voie de contrôle principale 6, permettant des logiques simplifiées.

La voie de contrôle alternative 7 est tout d'abord destinée à mettre en oeuvre un contrôle de freinage alternatif qui est au moins partiellement différent du contrôle de freinage principal. La voie de contrôle alternative 7 est conçue à partir d'une deuxième spécification matérielle et d'une deuxième spécification fonctionnelle qui sont différentes de celles de la voie de contrôle principale 6. Le contrôle de freinage alternatif est réalisé par des logiques de contrôle simplifiées exécutées par les composants analogiques (ou numériques : voir le paragraphe précédent). Les logiques de contrôle simplifiées assurent un freinage dans un mode dégradé, avec une performance et des fonctionnalités réduites par rapport à la voie de contrôle principale 6. La voie de contrôle alternative 7 acquiert ainsi la consigne de freinage alternative Cfa et génère des signaux de commande alternatifs Sca à destination du premier actionneur électromécanique 1, et des signaux de commande alternatifs Sca à destination du deuxième actionneur électromécanique 2 (les signaux de commande alternatifs Sca sont possiblement différents entre le premier actionneur électromécanique 1 et le deuxième actionneur électromécanique 2).

La consigne de freinage alternative Cfa est une consigne analogique. Alternativement, la consigne de freinage alternative Cfa pourrait être une consigne discrète. La consigne de freinage principale Cfp et la consigne de freinage alternative Cfa cheminent respectivement jusqu'à la voie de contrôle principale 6 et la voie de contrôle alternative 7 sur des canaux de communication distincts.

Les signaux de commande alternatifs Sca sont des signaux booléens de type PWM, numériques ou analogiques.

Le contrôle de freinage alternatif ne met pas en oeuvre de fonction d'anti-patinage.

Le contrôle de freinage alternatif ne met ici pas en oeuvre de machine d'états.

Le contrôle de freinage alternatif met en oeuvre un asservissement simplifié qui est destiné uniquement à assurer que l'effort de freinage est borné entre un niveau bas permettant une performance de freinage minimale et un niveau haut garantissant l'absence de blocage de la roue. Alternativement, l'asservissement simplifié peut être un asservissement de premiers courants électriques d'alimentation I1 fournis au premier moteur électrique 3 du premier actionneur électromécanique 1 et de deuxièmes courants électriques d'alimentation 12 fournis au deuxième moteur électrique 4 du deuxième actionneur électromécanique 2. Les moteurs électriques sont ici des moteurs triphasés, ce qui explique que l'on précise que chaque moteur électrique est alimenté par plusieurs courants. Des moteurs de type différent (monophasé, à courant continu, etc.), alimentés chacun par un seul courant, pourraient aussi être utilisés : on aurait alors un premier courant d'alimentation et un deuxième courant d'alimentation.

L'asservissement des premiers courants électriques d'alimentation I1 et des deuxièmes courants électriques d'alimentation 12 se fait sur une consigne de courant prédéterminée correspondant à l'effort de freinage bornée. On pourrait aussi envisager d'utiliser une consigne linéaire plutôt que binaire.

Il est possible que la relation entre l'effort de freinage et les courants électriques d'alimentation I1 et 12 soit variable. On pourra dans ce cas définir plusieurs valeurs de la consigne de courant prédéterminée.

C'est le cas typiquement lorsque le premier actionneur électromécanique 1 et le deuxième actionneur électromécanique 2 présentent des frottements internes, résultant de la viscosité de leur lubrification, qui peuvent être fonction de la température ambiante. Dans ce cas, les courants d'alimentation sont asservis sur deux niveaux possibles : un niveau bas et un niveau haut.

Le niveau bas est utilisé pour un ordre de freinage bas, typiquement pour une consigne pédale inférieure à 50% ou pour un contacteur de *park* en position intermédiaire. Le niveau bas permet d'atteindre l'effort critique prédéterminé pour une plage de température ambiante moyenne. Le niveau haut est utilisé pour un ordre de freinage haut, typiquement pour une consigne pédale supérieure à 50% ou pour un contacteur de *park* en position haute. Le niveau haut permet d'atteindre l'effort critique prédéterminé pour une plage de température ambiante basse.

L'unité de surveillance 8 comporte quant à elle des composants électriques numériques et/ou des composants électriques analogiques. Ces composants électriques permettent de mettre en oeuvre un module de surveillance 10, une porte OU 11, une porte NON 12 et un temporisateur 13.

Une première entrée de la porte OU 11 est reliée à une sortie du module de surveillance 10. L'entrée de la porte NON 12 est reliée à la sortie de la porte OU 11. L'entrée du temporisateur 13 est reliée à la sortie de la porte OU 11. La sortie de la porte NON 12 est reliée à la voie de contrôle principale 6. La sortie du temporisateur 13 est reliée à la voie de contrôle alternative 7.

Un signal d'activation Sap de la voie de contrôle principale 6 est présent sur la sortie de la porte NON 12. Lorsque le signal d'activation Sap prend la valeur binaire « 1 », la voie de contrôle principale 6 est activée. Lorsque le signal d'activation Sap prend la valeur binaire « 0 », la voie de contrôle principale 6 est désactivée.

De même, un signal d'activation Saa de la voie de contrôle alternative 7 est présent sur la sortie du temporisateur 13. Lorsque le signal d'activation Saa prend la valeur binaire « 1 », la voie de contrôle alternative 7 est activée. Lorsque le signal d'activation Saa prend la valeur binaire « 0 », la voie de contrôle alternative 7 est désactivée.

Le module de surveillance 10 reçoit, de la voie de contrôle principale 6, les signaux de commande principaux Scp à destination du premier actionneur électromécanique 1 sur sa première entrée, les signaux de commande principaux Scp à destination du deuxième actionneur électromécanique 2 sur sa deuxième entrée, ainsi que le signal d'état Se sur sa troisième entrée. Le module de surveillance 10 reçoit aussi la consigne de freinage principale Cfp sur sa quatrième entrée et la consigne de freinage alternative Cfa sur sa cinquième entrée.

L'unité de surveillance 8 peut aussi recevoir un ordre de reconfiguration Or produit par le pilote ou par l'avionique. L'ordre de reconfiguration Or est appliqué sur une deuxième entrée de la porte OU 11.

L'architecture de système de freinage comporte de plus un premier module de puissance 15 et un deuxième module de puissance 16. Le premier module de puissance 15 et le deuxième module de puissance 16 comprennent des composants électriques qui sont au moins partiellement différents au niveau matériel. Ainsi, le premier module de puissance 15 et le deuxième module de puissance 16 sont conçus selon une même spécification fonctionnelle, mais selon des spécifications matérielles différentes.

On note que le premier module de puissance 15 et le deuxième module de puissance 16 peuvent chacun être mis en oeuvre dans un ou plusieurs équipements, sur une ou plusieurs cartes électriques.

Le premier module de puissance 15 comprend tout d'abord une porte OU 18. La porte OU 18 comprend une première entrée reliée à une sortie de la voie de contrôle principale et une deuxième entrée reliée à une sortie de la voie de contrôle alternative.

Le premier module de puissance 15 comporte aussi un onduleur 19 (et ses *drivers*). La sortie de la porte OU 18 est reliée à l'entrée de l'onduleur 19. L'onduleur 19 reçoit une première tension d'alimentation continue d'une source de puissance principale 20 de l'aéronef. L'onduleur 19 génère à partir des signaux en sortie de la porte OU 18, c'est-à-dire à partir des signaux de commande principaux Scp ou bien des signaux de commande alternatifs Sca, et à partir de la première tension d'alimentation continue, les premiers courants électriques d'alimentation I1 pour alimenter le premier moteur électrique 3 du premier actionneur électromécanique 1.

Le premier module de puissance 15 comporte de plus un ou des capteurs 21, en l'occurrence un capteur de position d'un rotor du premier moteur électrique 3 et/ou un capteur de courant qui mesure les premiers courants électriques d'alimentation I1 et/ou un capteur d'effort. Les mesures produites par les capteurs 21 du premier module de puissance 15 sont acquises à la fois par la voie de contrôle principale 6 et par la voie de contrôle alternative 7, et permettent à la voie de contrôle principale 6 de réaliser le contrôle de freinage principal et à la voie de contrôle alternative 7 de réaliser le contrôle de freinage alternatif.

De même, le deuxième module de puissance 16 comprend tout d'abord une porte OU 23. La porte OU 23 comprend une première entrée reliée à une sortie de la voie de contrôle principale 6 et une deuxième entrée reliée à une sortie de la voie de contrôle alternative 7. La porte OU 23 reçoit sur sa première entrée les signaux de commande principaux Scp et sur sa deuxième entrée les signaux de commande alternatifs Sca.

Le deuxième module de puissance 16 comporte aussi un onduleur 24 (et ses *drivers*). La sortie de la porte OU 23 est reliée à l'entrée de l'onduleur 24. L'onduleur 24 reçoit une deuxième tension d'alimentation continue d'une source de puissance alternative 25 de l'aéronef. La source de puissance principale 20 et la source de puissance alternative 25 appartiennent à des réseaux de puissance différents. L'onduleur 24 génère à partir des signaux en sortie de la porte OU 23, c'est-à-dire à partir des signaux de commande principaux Scp ou bien des signaux de commande alternatifs Sca, et à partir de la deuxième tension d'alimentation continue, des deuxièmes courants électriques d'alimentation I2 pour alimenter le deuxième moteur électrique 4 du deuxième actionneur électromécanique 2.

Le deuxième module de puissance 16 comporte de plus un ou des capteurs 26, en l'occurrence un capteur de position d'un rotor du deuxième moteur électrique 4 et/ou un capteur de courant qui mesure les deuxièmes courant électrique d'alimentation I2 et/ou un capteur d'effort. Les mesures produites par les capteurs 26 du deuxième module de puissance 16 sont acquises à la fois par la voie de contrôle principale 6 et par la voie de contrôle alternative 7, et permettent à la voie de contrôle principale 6 de réaliser le contrôle de freinage principal et à la voie de contrôle alternative 7 de réaliser le contrôle de freinage alternatif.

On décrit maintenant plus en détail le fonctionnement de l'architecture de système de freinage.

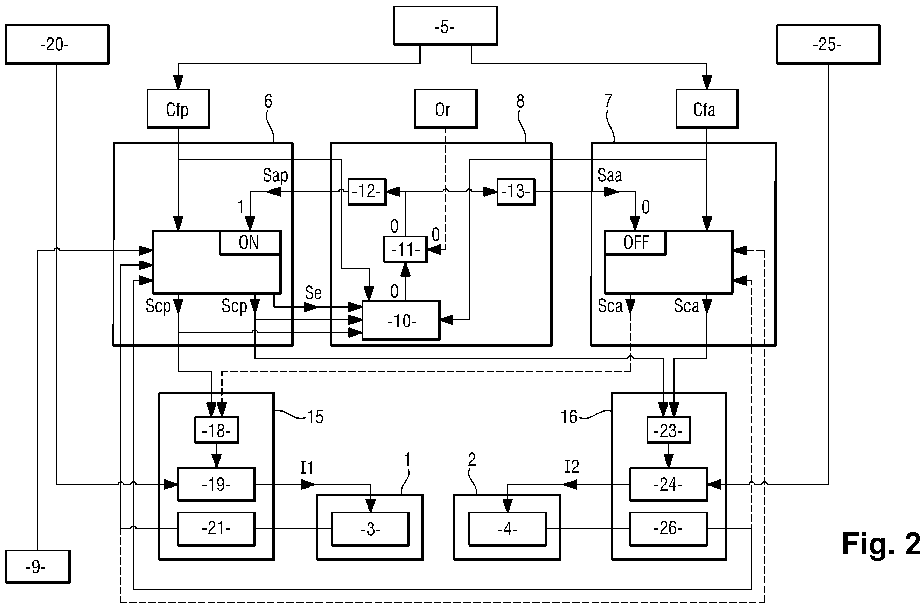

En référence à la figure 2, dans un mode de fonctionnement normal, qui correspond à une situation où la voie de contrôle principale 6 fonctionne normalement, la voie de contrôle alternative 7 est désactivée. Les canaux de communication en pointillés sur la figure 2 sont inactifs.

Le module de surveillance 10 de l'unité de surveillance 8 ne détecte pas de panne. La sortie du module de surveillance 10, et donc la première entrée de la porte OU 11, prennent la valeur 0. Aucun ordre de reconfiguration Or n'est reçu, et donc la deuxième entrée de la porte OU 11 a pour valeur 0. La sortie de la porte OU 11 a pour valeur 0, et donc la sortie de la porte NON 12 a pour valeur 1, alors que la sortie du temporisateur 13 a pour valeur 0. Le signal d'activation Sap de la voie de contrôle principale 6 est égal à 1, de sorte que la voie de contrôle principale 6 est activée. Au contraire, le signal d'activation Saa de la voie de contrôle alternative 7 est égal à 0, de sorte que la voie de contrôle alternative 7 est désactivée.

Ainsi, la voie de contrôle principale 6 produit les signaux de commande principaux Scp, alors que les signaux de commande alternatifs Sca de la voie de contrôle alternative 7 sont à l'état inactif.

L'unité de surveillance 8 est donc agencée pour activer la voie de contrôle principale 6 et désactiver la voie de contrôle alternative 7 en fonctionnement normal.

En sortie de la porte OU 18 du premier module de puissance 15, on trouve donc, tout comme en sortie de la porte OU 23 du deuxième module de puissance 16, les signaux de commande principaux Scp. Les signaux de commande principaux Scp pilotent l'onduleur 19 du premier module de puissance 15 et l'onduleur 24 du deuxième module de puissance 16, et donc sont utilisés pour générer les premiers courants électriques d'alimentation I1 et les deuxièmes courants électriques d'alimentation I2.

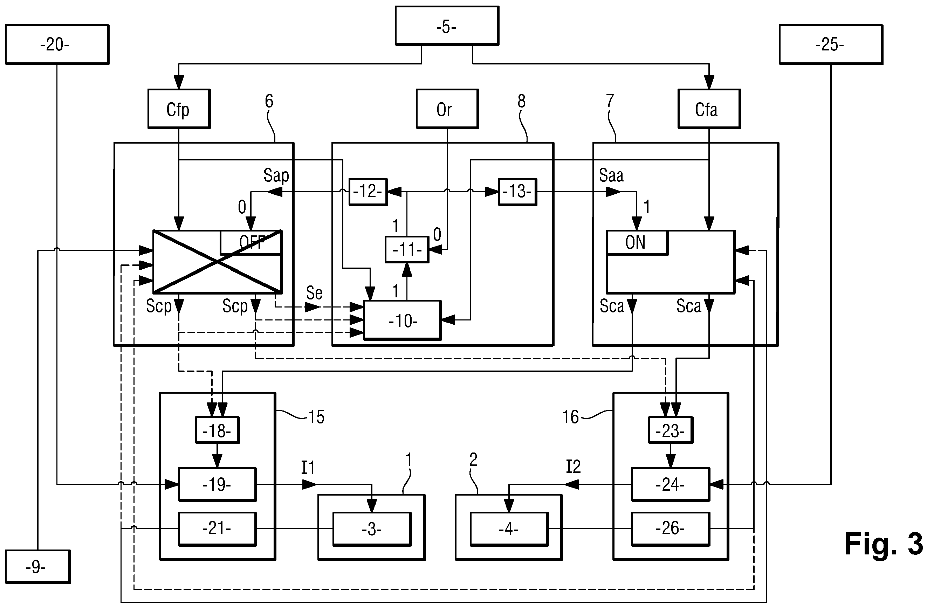

En référence à la figure 3, il est possible qu'une panne impacte la voie de contrôle principale 6. Cette panne peut avoir son origine directement dans la voie de contrôle principale 6, ou bien peut avoir son origine à l'extérieur de la voie de contrôle principale 6 mais avoir pour conséquence un dysfonctionnement de la voie de contrôle principale 6. Par exemple la panne peut se produire en amont de la voie de contrôle principale 6 et avoir pour conséquence un défaut de la transmission de la consigne de freinage principale Cfp, due par exemple à un défaut de la couche avionique de traitement ou du bus numérique.

Dans ce cas, le module de surveillance 10 peut détecter lui-même la panne. Si la panne a pour conséquence un défaut de la transmission de la consigne de freinage principale Cfp, cette panne peut être détectée par le module de surveillance 10 par comparaison de la consigne de freinage principale Cfp (qu'il reçoit sur sa quatrième entrée) et de la consigne de freinage alternative Cfa (qu'il reçoit sur sa cinquième entrée).

La voie de contrôle principale 6 peut aussi détecter elle-même la panne et transmettre un message de panne au module de surveillance 10 de l'unité de surveillance 8. Dans cette dernière hypothèse, le signal d'état Se que reçoit le module de surveillance 10 sur sa troisième entrée est représentatif d'une panne.

La sortie du module de surveillance 10, et donc la première entrée de la porte OU 11, prennent la valeur 1. Aucun ordre de reconfiguration 0r n'est reçu, et donc la deuxième entrée de la porte OU 11 a pour valeur 0. La sortie de la porte OU 11 a pour valeur 1, et donc la sortie de la porte NON 12 a pour valeur 0, alors que la sortie du temporisateur 13 a pour valeur 1. Le signal d'activation Sap de la voie de contrôle principale 6 passe donc à 0, de sorte que la voie de contrôle principale 6 est désactivée. Au contraire, le signal d'activation Saa de la voie de contrôle alternative 7 passe à 1, après un court retard produit par le temporisateur 13, de sorte que la voie de contrôle alternative 7 est activée.

Ainsi, la voie de contrôle alternative 7 produit les signaux de commande alternatifs Sca, alors que les signaux de commande principaux Scp de la voie de contrôle principale 6 sont à l'état inactif. On note que le court retard permet d'éviter que les signaux de commande principaux Scp (produits avant la survenue de la panne) et les signaux de commande alternatifs Sca (produits à partir de la survenue de la panne) ne se superposent.

En sortie de la porte OU 18 du premier module de puissance 15, on trouve donc, tout comme en sortie de la porte OU 23 du deuxième module de puissance 16, les signaux de commande alternatifs Sca. Les signaux de commande alternatifs Sca pilotent l'onduleur 19 du premier module de puissance 15 et l'onduleur 24 du deuxième module de puissance 16, et donc sont utilisés pour générer les premiers courants électriques d'alimentation I1 et les deuxièmes courants électriques d'alimentation I2.

L'unité de surveillance 8 est donc agencée pour désactiver la voie de contrôle principale 6 et activer la voie de contrôle alternative 7 en cas de panne impactant la voie de contrôle principale 6.

La reconfiguration de l'architecture, c'est-à-dire le changement de voie active, est donc réalisée par l'unité de surveillance 8. Cependant, cette reconfiguration peut aussi être réalisée par le pilote si celui-ci détecte un comportement anormal du système, afin de mettre en oeuvre un contrôle par la voie de contrôle alternative 7. La reconfiguration peut également être activée de façon automatique par l'avionique. Cette reconfiguration utilise l'ordre de reconfiguration Or qui est appliqué sur la deuxième entrée de la porte OU 11. Lorsque la voie de contrôle principale 6 est active et que la première entrée de la porte OU a pour valeur 0, un ordre de reconfiguration Or égal à 1 permet de faire passer le signal d'activation Sap de la voie de contrôle principale 6 de 1 à 0 et le signal d'activation Saa de la voie de contrôle alternative 7 de 0 à 1 : la voie de contrôle principale 6 est désactivée et la voie de contrôle alternative 7 est activée.

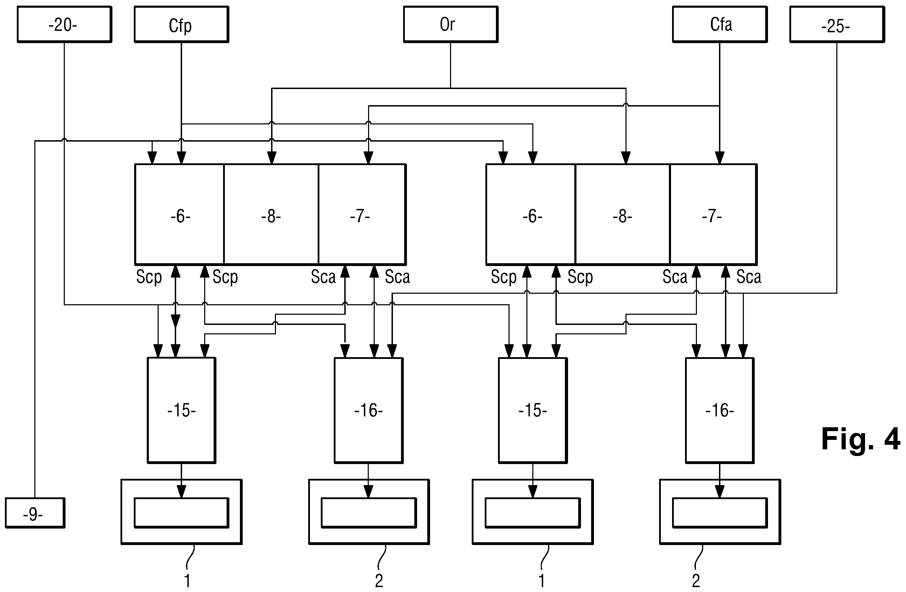

En référence à la figure 4, on voit qu'un frein complet comporte quatre actionneurs qui sont pilotés par deux blocs de contrôle principal 6 redondants et par deux blocs de contrôle alternatif 7 redondants. La voie de contrôle principale 6 est formée par les deux blocs de contrôle principal 6, et la voie de contrôle alternative 7 est formée par les deux blocs de contrôle alternatifs 7.

La voie de contrôle principale 6 génère des signaux de commande principaux Scp à destination des deux premiers modules de puissance 15, et donc des deux premiers actionneurs électromécaniques 1, et à destination des deux deuxièmes modules de puissance 16, et donc des deux deuxième actionneur électromécanique 2.

De même, la voie de contrôle alternative 7 génère des signaux de commande alternatifs Sca à destination des deux premiers modules de puissance 15, et donc des deux premiers actionneurs électromécaniques 1, et à destination des deux deuxièmes modules de puissance 16, et donc des deux deuxième actionneur électromécanique 2.

Les premiers modules de puissance 15 et les deuxièmes modules de puissance 16 sont conçus selon des spécifications matérielles différentes.

Les onduleurs des premiers modules de puissance 15 sont alimentés par la source de puissance principale 20, et les onduleurs des deuxièmes modules de puissance 16 sont alimentés par la source de puissance alternative 25.

On note que la perte de la source de puissance principale 20 ou de la source de puissance alternative 25 entraîne la perte de freinage sur la moitié seulement des actionneurs (c'est-à-dire sur les premiers actionneurs électromécaniques 1 ou sur les deuxièmes actionneurs électromécaniques 2).

Des principes de sécurisation des réseaux de puissance ou de compensation des actionneurs inactifs par les actionneurs restant actifs sont connus pour éviter ou limiter l'impact de ce type de défaut (par la voie principale).

On note aussi qu'une défaillance simple ou de mode commun, affectant un composant simple (onduleur, porte OU en amont de l'onduleur, capteurs), impacterait possiblement soit tous les premiers modules de puissance, soit tous les deuxièmes modules de puissance. Une telle défaillance entraîne la perte de freinage sur l'un ou la totalité des moteurs des actionneurs associés.

Les autres actionneurs restant actifs permettent de conserver une capacité de freinage réduite mais acceptable dans des conditions de fonctionnement en mode dégradé.

Des principes de compensation des actionneurs inactifs par les actionneurs restant actifs sont connus pour limiter l'impact de ce type de défaut (par la voie de contrôle principale).

On note que, suivant les technologies utilisées, tout ou partie des composants « simples » peuvent être considérés non-susceptibles de pannes de mode commun, et donc implémentés sans dissimilarité.

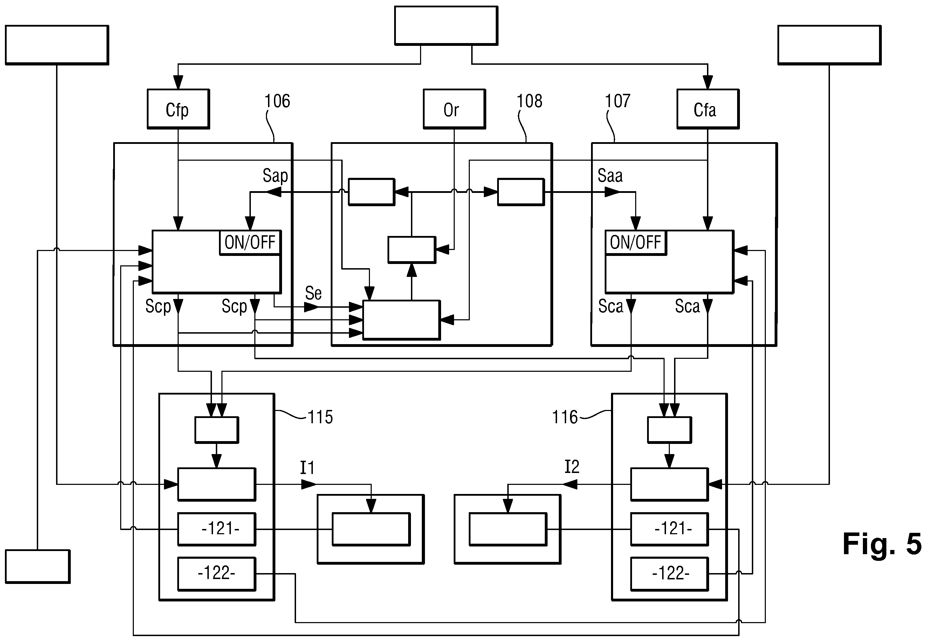

En référence à la figure 5, dans une architecture de système de freinage selon un deuxième mode de réalisation de l'invention, le premier module de puissance 115 et le deuxième module de puissance 116 comportent chacun un capteur principal 121 et un capteur alternatif 122. Le capteur alternatif 122 est ici un capteur à seuil d'effort agencé pour se refermer lorsque l'effort de freinage atteint l'effort critique prédéterminé. Le capteur principal 121 est l'un de ceux décrits dans le premier mode de réalisation de l'invention (capteur de position, capteur de courant ou capteur d'effort autre qu'un contacteur). Le capteur alternatif 122 et le capteur principal 121 sont donc différents.

Le capteur principal 121 est relié à la voie de contrôle principale 106 pour mettre en oeuvre le contrôle de freinage principal et le capteur alternatif 122 est relié à la voie de contrôle alternative 107 pour mettre en oeuvre le contrôle de freinage alternatif. L'unité de surveillance 108 est semblable à celle du premier mode de réalisation de l'invention.

On augmente ainsi la dissemblance entre la voie de contrôle principale 106 et la voie de contrôle alternative 107. On simplifie par ailleurs le contrôle de freinage alternatif en utilisant un capteur alternatif 122 qui est relativement simple.

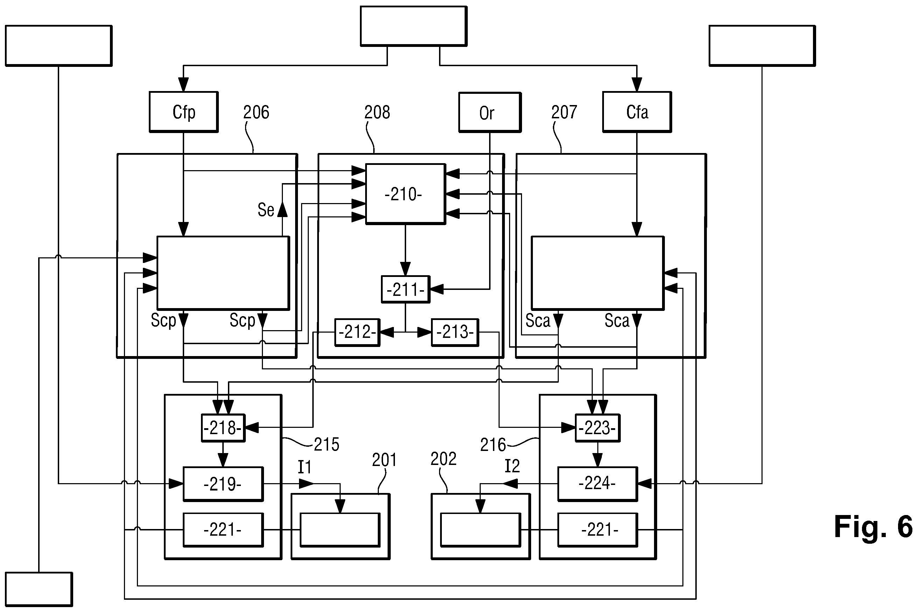

On décrit maintenant, en référence à la figure 6, une architecture de freinage selon un troisième mode de réalisation de l'invention.

L'unité de surveillance 208 comporte à nouveau un module de surveillance 210, une porte OU 211, une porte NON 212 et un temporisateur 213.

Le module de surveillance 210 comprend une première entrée par laquelle il reçoit les signaux de commande principaux Scp produits par la voie de contrôle principale 206 à destination du premier actionneur électromécanique 201, une deuxième entrée par laquelle il reçoit les signaux de commande principaux Scp produits par la voie de contrôle principale 206 à destination du deuxième actionneur électromécanique 202, une troisième entrée par laquelle il reçoit le signal d'état Se produit par la voie de contrôle principale 106, une quatrième entrée par laquelle il reçoit la consigne de freinage principale Cfp, une cinquième entrée par laquelle il reçoit les signaux de commande alternatifs Sca produits par la voie de contrôle alternative 207 à destination du premier actionneur électromécanique 201, une sixième entrée par laquelle il reçoit les signaux de commande alternatifs Sca produits par la voie de contrôle alternative 207 à destination du deuxième actionneur électromécanique 202, et une septième entrée par laquelle il reçoit la consigne de freinage alternative Cfa.

Cette fois, la sortie de la porte NON 212 est reliée à une entrée de la porte OU 218 du premier module de puissance 215, et la sortie du temporisateur 213 est reliée à une entrée de la porte OU 223 du deuxième module de puissance 216. Les portes OU 218, 223 du premier module de puissance 215 et du deuxième module de puissance 216, situées en amont des onduleurs 219 et 224, sont pilotables en fonction de logiques produites par le module de surveillance 210.

Dans le troisième mode de réalisation de l'invention, la voie de contrôle principale 206 et la voie de contrôle alternative 207 sont toutes deux actives en même temps et en permanence. Le module de surveillance 210 traite les signaux qu'il acquiert par ses sept entrées, et établit un diagnostic de la voie de contrôle principale 206 et de la voie de contrôle alternative 207. En fonction du résultat de ce diagnostic, le module de surveillance 210 sélectionne, parmi les signaux de commande principaux Scp et les signaux de commande alternatifs Sca, ceux qui pilotent les onduleurs 219, 224 du premier actionneur électromécanique 201 et du deuxième actionneur électromécanique 202 et donc qui génèrent les premiers courants électriques d'alimentation I1 et les deuxièmes courants électriques d'alimentation I2. La sélection est réalisée en pilotant les portes OU 218, 223 du premier module de puissance 215 et du deuxième module de puissance 216.

Ici, les signaux de commande principaux Scp sont sélectionnés en fonctionnement normal par l'unité de surveillance 208. Si le module de surveillance 210 détecte une panne de la voie de contrôle normale 206, ce sont les signaux de commande alternatifs Sca qui sont sélectionnés.

L'invention n'est pas limitée aux modes de réalisation particuliers qui viennent d'être décrits, mais, bien au contraire, couvre toute variante entrant dans le cadre de l'invention tel que défini par les revendications.

Il est bien sûr possible de prévoir que chaque voie de contrôle soit reliée non pas à deux actionneurs électromécaniques, mais à un nombre différent d'actionneur(s) électromécanique(s), via un nombre quelconque de modules de puissance. Chaque voie de contrôle pourrait aussi piloter des actionneurs de plusieurs freins.

## Revendications

1. Architecture de système de freinage pour aéronef, comportant :
- un frein destiné à freiner une roue de l'aéronef et comportant des organes de friction ainsi qu'un premier actionneur électromécanique (1 ; 101 ; 201) et un deuxième actionneur électromécanique (2 ; 102 ; 202) comprenant respectivement un premier moteur électrique (3) et un deuxième moteur électrique (4) et agencés pour appliquer un effort de freinage sur les organes de friction ;
- une voie de contrôle principale (6 ; 106 ; 206) et une voie de contrôle alternative (7 ; 107 ; 207) comprenant des composants électriques qui sont au moins partiellement différents et agencées pour mettre en œuvre respectivement un contrôle de freinage principal et un contrôle de freinage alternatif qui sont au moins partiellement différents, de sorte que la voie de contrôle principale et la voie de contrôle alternative génèrent respectivement des signaux de commande principaux (Scp) et des signaux de commande alternatifs (Sca), le contrôle de freinage principal mettant en œuvre un asservissement de l'effort de freinage basé sur une mesure directe de l'effort de freinage ou bien sur un contrôle d'un enfoncement de pistons du premier actionneur électromécanique et du deuxième actionneur électromécanique, et le contrôle de freinage alternatif mettant en œuvre un asservissement simplifié qui est destiné uniquement à assurer que l'effort de freinage est borné entre un niveau bas permettant une performance de freinage minimale et un niveau haut garantissant l'absence de blocage de la roue ;
- un premier module de puissance (15 ; 115 ; 215) et un deuxième module de puissance (16 ; 116 ; 216) comprenant des composants électriques qui sont au moins partiellement différents et agencés pour générer, à partir des signaux de commande principaux ou bien des signaux de commande alternatifs, respectivement au moins un premier courant électrique d'alimentation (I1) pour alimenter le premier moteur électrique et au moins un deuxième courant électrique d'alimentation (I2) pour alimenter le deuxième moteur électrique ;
- une unité de surveillance (8 ; 108 ; 208) agencée pour assurer que, en fonctionnement normal, les signaux de commande principaux sont utilisés pour générer le premier courant électrique d'alimentation et le deuxième courant électrique d'alimentation et que, en cas de panne impactant la voie de contrôle principale, les signaux de commande alternatifs sont utilisés pour générer le premier courant électrique d'alimentation et le deuxième courant électrique d'alimentation.

2. Architecture selon la revendication 1, dans laquelle l'unité de surveillance est agencée pour activer la voie de contrôle principale (6 ; 106) et désactiver la voie de contrôle alternative (7 ; 107) en fonctionnement normal, et pour désactiver la voie de contrôle principale et activer la voie de contrôle alternative en cas de panne impactant la voie de contrôle principale.

3. Architecture selon la revendication 1, dans laquelle la voie de contrôle principale (206) et la voie de contrôle alternative (207) sont activées en permanence, et dans laquelle l'unité de surveillance (208) est agencée pour sélectionner les signaux de commande principaux pour générer les premiers courants électriques d'alimentation et les deuxièmes courants électriques d'alimentation en fonctionnement normal, et les signaux de commande alternatifs pour générer les premiers courants électriques d'alimentation et les deuxièmes courants électriques d'alimentation en cas de panne impactant la voie de contrôle principale.

4. Architecture selon l'une des revendications précédentes, dans laquelle l'unité de surveillance et la voie de contrôle principale sont chacune agencées pour détecter une panne impactant la voie de contrôle principale.

5. Architecture selon l'une des revendications précédentes, dans laquelle l'unité de surveillance comprend un module de surveillance (10 ; 210), une porte OU (11 ; 211), une porte NON (12 ; 212) et un temporisateur (13 ; 213) .

6. Architecture selon l'une des revendications précédentes, dans laquelle la voie de contrôle principale comprend au moins un composant numérique de traitement agencé pour mettre en œuvre le contrôle de freinage principal, et dans laquelle la voie de contrôle alternative comprend des composants analogiques agencés pour mettre en œuvre le contrôle de freinage alternatif.

7. Architecture selon l'une des revendications précédentes, dans laquelle la voie de contrôle principale et la voie de contrôle alternative reçoivent respectivement une consigne de freinage principale (Cfp) et une consigne de freinage alternative (Cfa), qui sont représentatives d'un ordre de freinage produit par un pilote de l'aéronef ou par un système de freinage automatique, et qui cheminent jusqu'à la voie de contrôle principale et la voie de contrôle alternative par des canaux de communication distincts.

8. Architecture selon l'une des revendications précédentes, dans laquelle le premier module de puissance et le deuxième module de puissance sont alimentés par des sources de puissance distinctes appartenant à des réseaux de puissance différents.

9. Architecture selon l'une des revendications précédentes, dans laquelle le contrôle de freinage principal met en oeuvre, contrairement au contrôle de freinage alternatif, une fonction d'anti-patinage ainsi que des machines d'états pour séquencer différentes phases de fonctionnement du premier actionneur électromécanique et du deuxième actionneur électromécanique.

10. Architecture selon la revendication 1, dans laquelle l'asservissement simplifié est un asservissement, sur une consigne de courant prédéterminée correspondant à l'effort critique prédéterminé, du premier courant électrique d'alimentation (I1) et du deuxième courant électrique d'alimentation (I2).

11. Architecture selon l'une des revendications précédentes, dans laquelle le premier module de puissance et le deuxième module de puissance comportent chacun un capteur principal (121) et un capteur alternatif (122) différent du capteur principal, le capteur principal étant relié à la voie de contrôle principal pour mettre en œuvre le contrôle de freinage principal et le capteur alternatif étant relié à la voie de contrôle alternative pour mettre en œuvre le contrôle de freinage alternatif.

12. Architecture selon la revendication 11, dans laquelle le capteur principal est un capteur de courant ou un capteur de position de rotor ou un capteur d'effort, et dans laquelle le capteur alternatif est un capteur à seuil d'effort.

13. Architecture selon l'une des revendications précédentes, dans laquelle le premier module de puissance et le deuxième module de puissance comportent chacun une porte OU ayant une première entrée reliée à la voie de contrôle principale et une deuxième entrée reliée à la voie de contrôle alternative.

## Patentansprüche

1. Aufbau eines Bremssystems für ein Luftfahrzeug, umfassend:
- eine Bremse, die dazu bestimmt ist, ein Rad des Luftfahrzeugs zu bremsen, und Reibelemente sowie einen ersten elektromechanischen Aktor (1; 101; 201) und einen zweiten elektromechanischen Aktor (2; 102; 202) umfasst, die einen ersten Elektromotor (3) bzw. einen zweiten Elektromotor (4) umfassen und ausgebildet sind, eine Bremskraft auf die Reibelemente aufzubringen;
- einen Hauptsteuerkanal (6; 106; 206) und einen Alternativsteuerkanal (7; 107; 207), die elektrische Komponenten umfassen, die zumindest teilweise unterschiedlich und ausgebildet sind, eine Hauptbremssteuerung bzw. eine Alternativbremssteuerung durchzuführen, die zumindest teilweise unterschiedlich sind, derart, dass der Hauptsteuerkanal und der Alternativsteuerkanal Hauptsteuersignale (Scp) bzw. Alternativsteuersignale (Sca) erzeugen, wobei die Hauptbremssteuerung eine Regelung der Bremskraft auf der Grundlage einer direkten Messung der Bremskraft oder einer Kontrolle eines Niederdrückens von Kolben des ersten elektromechanischen Aktors oder des zweiten elektromechanischen Aktors durchführt, und die Alternativbremssteuerung eine vereinfachte Regelung durchführt, die nur dazu bestimmt ist, sicherzustellen, dass die Bremskraft zwischen einem unteren Niveau, das eine minimale Bremsleistung ermöglicht, und einem oberen Niveau, das das Nichtvorhandensein einer Blockierung des Rades garantiert, begrenzt ist;
- ein erstes Leistungsmodul (15; 115; 215) und ein zweites Leistungsmodul (16; 116; 216), die elektrische Komponenten umfassen, die zumindest teilweise unterschiedlich und ausgebildet sind, anhand der Hauptsteuersignale oder der Alternativsteuersignale mindestens einen ersten elektrischen Versorgungsstrom (I1) zu erzeugen, um den ersten Elektromotor zu speisen, bzw. mindestens einen zweiten elektrischen Versorgungsstrom (12), um den zweiten Elektromotor zu speisen;
- eine Überwachungseinheit (8; 108; 208), die ausgebildet ist, sicherzustellen, dass im Normalbetrieb die Hauptsteuersignale verwendet werden, um den ersten elektrischen Versorgungsstrom und den zweiten elektrischen Versorgungsstrom zu erzeugen, und dass im Falle einer Störung, die sich auf den Hauptsteuerkanal auswirkt, die Alternativsteuersignale verwendet werden, um den ersten elektrischen Versorgungsstrom und den zweiten elektrischen Versorgungsstrom zu erzeugen.

2. Aufbau nach Anspruch 1, bei dem die Überwachungseinheit ausgebildet ist, im Normalbetrieb den Hauptsteuerkanal (6; 106) zu aktivieren und den Alternativsteuerkanal (7; 107) zu deaktivieren und im Falle einer Störung, die sich auf den Hauptsteuerkanal auswirkt, den Hauptsteuerkanal zu deaktivieren und den Alternativsteuerkanal zu aktivieren.

3. Aufbau nach Anspruch 1, bei dem der Hauptsteuerkanal (206) und der Alternativsteuerkanal (207) dauerhaft aktiviert sind und bei dem die Überwachungseinheit (208) ausgebildet ist, die Hauptsteuersignale auszuwählen, um im Normalbetrieb die ersten elektrischen Versorgungsströme und die zweiten elektrischen Versorgungsströme zu erzeugen, und die Alternativsteuersignale auszuwählen, um im Falle einer Störung, die sich auf den Hauptsteuerkanal auswirkt, die ersten elektrischen Versorgungsströme und die zweiten elektrischen Versorgungsströme zu erzeugen.

4. Aufbau nach einem der vorhergehenden Ansprüche, bei dem die Überwachungseinheit und der Hauptsteuerkanal jeweils ausgebildet sind, um eine Störung, die sich auf den Hauptsteuerkanal auswirkt, zu detektieren.

5. Aufbau nach einem der vorhergehenden Ansprüche, bei dem die Überwachungseinheit ein Überwachungsmodul (10; 210), ein ODER-Gatter (11; 211), ein NEIN-Gatter (12; 212) und einen Zeitgeber (13; 213) umfasst.

6. Aufbau nach einem der vorhergehenden Ansprüche, bei dem der Hauptsteuerkanal mindestens eine digitale Verarbeitungskomponente umfasst, die ausgebildet ist, die Hauptbremssteuerung durchzuführen, und bei dem der Alternativsteuerkanal analoge Komponenten umfasst, die ausgebildet sind, die Alternativbremssteuerung durchzuführen.

7. Aufbau nach einem der vorhergehenden Ansprüche, bei dem der Hauptsteuerkanal und der Alternativsteuerkanal einen Hauptbremssollwert (Cfp) bzw. einen Alternativbremssollwert (Cfa) empfangen, die repräsentativ für einen Bremsbefehl sind, der von einem Piloten des Luftfahrzeugs oder von einem automatischen Bremssystem erzeugt wird, und die über verschiedene Kommunikationskanäle bis zu dem Hauptsteuerkanal und dem Alternativsteuerkanal gelangen.

8. Aufbau nach einem der vorhergehenden Ansprüche, bei dem das erste Leistungsmodul und das zweite Leistungsmodul von getrennten Leistungsquellen versorgt werden, die zu verschiedenen Leistungsnetzen gehören.

9. Aufbau nach einem der vorhergehenden Ansprüche, bei dem die Hauptbremssteuerung im Gegensatz zur Alternativbremssteuerung eine Antischlupffunktion einsetzt, sowie Zustandsmaschinen, um verschiedene Betriebsphasen des ersten elektromechanischen Aktors und des zweiten elektromechanischen Aktors zu sequenzieren.

10. Aufbau nach Anspruch 1, bei dem die vereinfachte Regelung eine Regelung an einem der vorbestimmten kritischen Kraft entsprechenden vorbestimmten Stromsollwert des ersten elektrischen Versorgungsstroms (I1) und des zweiten elektrischen Versorgungsstroms (12) ist.

11. Aufbau nach einem der vorhergehenden Ansprüche, bei dem das erste Leistungsmodul und das zweite Leistungsmodul jeweils einen Hauptsensor (121) und einen sich vom Hauptsensor unterscheidenden Alternativsensor (122) umfassen, wobei der Hauptsensor mit dem Hauptsteuerkanal verbunden ist, um die Hauptbremssteuerung durchzuführen, und der Alternativsensor mit dem Alternativsteuerkanal verbunden ist, um die Alternativbremssteuerung durchzuführen.

12. Aufbau nach Anspruch 11, bei dem der Hauptsensor ein Stromsensor oder ein Rotorpositionssensor oder ein Kraftsensor ist und bei dem der Alternativsensor ein Kraftschwellenwertsensor ist.

13. Aufbau nach einem der vorhergehenden Ansprüche, bei dem das erste Leistungsmodul und das zweite Leistungsmodul jeweils ein ODER-Gatter umfassen, das einen ersten Eingang hat, der mit dem Hauptsteuerkanal verbunden ist, und einen zweiten Eingang, der mit dem Alternativsteuerkanal verbunden ist.

## Claims

1. Aircraft braking system architecture comprising:
- a brake intended to brake a wheel of the aircraft and comprising friction members and a first electromechanical actuator (1; 101; 201) and a second electromechanical actuator (2; 102; 202) respectively comprising a first electric motor (3) and a second electric motor (4) and adapted to apply a braking force to the friction members;
- a principal control channel (6; 106; 206) and an alternative control channel (7; 107; 207) comprising electrical components that are at least partly different and respectively adapted to produce a principal braking control function and an alternative braking control function that are at least partly different so that the principal control channel and the alternative control channel respectively generate principal control signals (Scp) and alternative control signals (Sca), the principal braking control function employing servocontrol of the braking force based on direct measurement of the braking force or based on monitoring a depression of pistons of the first electromechanical actuator and of the second electromechanical actuator and the alternative braking control function employing a simplified servocontrol function that is intended only to ensure that the braking force is bounded between a low level enabling minimum braking performance and a high level guaranteeing absence of locking up of the wheel ;
- a first power module (15; 115; 215) and a second power module (16; 116; 216) comprising electrical components that are at least partly different and adapted to generate on the basis of the principal control signals or the alternative control signals respectively at least one first electrical power supply current (I1) for supplying power to the first electric motor and at least one second electrical power supply current (I2) for supplying power to the second electric motor;
- a surveillance unit (8; 108; 208) adapted to ensure that in normal operation the principal control signals are used to generate the first electrical power supply current and the second electrical power supply current and in the event of a fault impacting the principal control channel the alternative control signals are used to generate the first electrical power supply current and the second electrical power supply current.

2. Architecture according to Claim 1, in which the surveillance unit is adapted to activate the principal control channel (6; 106) and to deactivate the alternative control channel (7; 107) in normal operation and to deactivate the principal control channel and to activate the alternative control channel in the event of a fault impacting the principal control channel.

3. Architecture according to Claim 1, in which the principal control channel (206) and the alternative control channel (207) are activated permanently and, in which the surveillance unit (208) is adapted to select the principal control signals to generate the first electrical power supply currents and the second electrical power supply currents in normal operation and the alternative control signals to generate the first electrical power supply currents and the second electrical power supply currents in the event of a fault impacting the principal control channel.

4. Architecture according to any one of the preceding claims, in which the surveillance unit and the principal control channel are each adapted to detect a fault impacting the principal control channel.

5. Architecture according to any one of the preceding claims, in which the surveillance unit comprises a surveillance module (10; 210), an OR gate (11; 211), a NOT gate (12; 212) and a timer (13; 213).

6. Architecture according to any one of the preceding claims, in which the principal control channel comprises at least one digital processing component adapted to produce the principal braking control function and in which the alternative control channel comprises analog components adapted to produce the alternative braking control function.

7. Architecture according to any one of the preceding claims, in which the principal control channel and the alternative control channel respectively receive a principal braking command (Cfp) and an alternative braking command (Cfa) that represent a braking order produced by a pilot of the aircraft or by an automatic braking system and that are routed to the principal control channel and to the alternative control channel by distinct communication channels.

8. Architecture according to any one of the preceding claims, in which the first power module and the second power module are supplied with power by distinct power sources belonging to different power networks.

9. Architecture according to any one of the preceding claims, in which, in contrast to the alternative braking control function, the principal braking control function employs an anti-wheelspin function and state machines for sequencing different phases of operation of the first electromechanical actuator and of the second electromechanical actuator.

10. Architecture according to Claim 1, in which the simplified servocontrol function is a servocontrol function in respect of a predetermined current command corresponding to the predetermined critical force, the first electrical power supply current (I1) and the second electrical power supply current (I2).

11. Architecture according to any one of the preceding claims, in which the first power module and the second power module each include a principal sensor (121) and an alternative sensor (122) different from the principal sensor, the principal sensor being connected to the principal control channel to produce the principal braking control function and the alternative sensor being connected to the alternative control channel to produce the alternative braking control function.

12. Architecture according to Claim 11, in which the principal sensor is a current sensor or a rotor position sensor or a force sensor and in which the alternative sensor is a force threshold sensor.

13. Architecture according to any one of the preceding claims, in which the first power module and the second power module each include an OR gate having a first input connected to the principal control channel and a second input connected to the alternative control channel.
